# EUROPEAN PATENT APPLICATION

(11) **EP 4 617 247 A1**
(43) Date of publication of application: **17.09.2025**
(21) Application number: 25158614.5
(22) Date of filing: 18.02.2025
(51) Int. Cl.: C04B 26/00, C04B 26/02, C04B 30/02, E04B 1/88

(54) **THERMO-SOUND ISOLATION PANEL AND METHOD FOR THE PREPARATION THEREOF**

(30) Priority: 11.03.2024 EP 24162644
(71) Applicant: Aconitum Swiss Sàrl, 2853 Courfaivre (CH)
(72) Inventor: Vainerman, Efim, 2800 Delémont (CH)
(74) Representative: Vossius & Partner Patentanwälte Rechtsanwälte mbB

(57) **Abstract**

The present invention relates to a thermo-sound insulation material comprising a) at least 25 wt% of collagen fibers obtained from collagen containing solid tannery waste; b) at least 1wt% pelt trimming; and c) at least 30 wt% mineral filler.

## Description

### FIELD OF THE DISCLOSURE

The present invention relates to a thermo-sound insulation material. The material comprises at least 25 wt% of collagen fibers obtained from collagen containing solid tannery waste, at least 1 wt% pelt trimming and at least 30 wt% mineral filler. Also provided are macroporous xerogel composites and thermo-acoustic insulation materials as well as insulation panels comprising the same, which can be used in civil and industrial construction sites and further applications to save energy and reduce the level of airborne, impact-born and structural noise. The macroporous xerogel composite, thermo-acoustic insulation material and the insulation panel of the present invention surprisingly displays both low thermal conductivity and high sound-absorbing ability. Typically, the macroporous xerogel composite is formed into a thermo-acoustic material or an in the form of a sheet, mat or panel such as an insulation, which are attached to the surface of the main load-bearing and enclosing structures of buildings or structures. As a result, energy losses spent on heating or cooling are reduced, and acoustic energy is absorbed from both external and internal sources.

### BACKGROUND

The prior art known in the field includes patent application KR20180056036, entitled "The panel for noise prevention between layers for building and construction", which describes a layered panel comprising upper and lower panels and a plurality of uneven portions which form independent unit chambers. Each unit chamber is filled with silica sand and perlite powder as a sound absorbing material. KR20150141459, entitled "Room acoustic panel sound-absorption material using sand", describes an indoor sound absorption panel comprising layered structure with corrugated plates and sand. A further patent application, KR20110126398, titled "Absorption panel between floors", describes a layered panel comprising sand grains as a sound insulating material. Lastly, CN103556730, titled "Environmental-friendly kaolin acoustic board", describes a kaolin acoustic board prepared from a built-in frame and kaolin composite foaming agent embedded therein which is cured to provide the kaolin acoustic board.

Within the field of the present invention, the main types of heat and sound insulating materials known are: 1) polymers, which are produced by extrusion from polymer melts, 2) fiberglass, manufactured on the basis of fibers from glass or its waste, 3) mineral, where fibers obtained by melting basalt, dolomite, diabase, and other similar materials.

Although polymers, fiberglass and minerals demonstrate acceptable heat and sound insulation characteristics and widespread application in construction industry, these materials do not fully comply with the modern requirements in terms of their production process and practical use.

Most polymer materials used for heat and sound insulation applications are produced from non-renewable resources including oil and gas, which have a negative influence of the environment. Moreover, the disposal or polymer materials is environmentally harmful and unsafe since they do not biodegrade. Moreover, the application of polymer-based heat and sound insulating materials is significantly limited due their flammability which also produces highly toxic combustion products. Typically, the flammability properties of polymer-based insulation materials may be adjusted to some extent by using fire retardants and other functional additives, however this inevitably increases production cost of the materials and thus also the cost of construction.

Thermal and sound insulating materials based on glass and mineral fiber have become very widespread in construction applications. The process of their manufacture includes obtaining a melt from glass or mineral raw materials, molding fibers from the melt, and bonding the fibers to each other by treating them with a polymer binder. The latter are most often oligomeric polycondensation products of phenol, or its analogues, with formaldehyde.

A significant disadvantage of these materials is their high hygroscopic properties. When faced with moister, the thermal conductivity coefficient typically increases such that heat can no longer be retained, for example, some types of stone wool when exposed to moisture display a thermal conductivity coefficient that is 20 times higher than the dry material. This means that under actual operating conditions, and especially with sudden temperature changes, the insulating properties of materials based on glass and mineral fibers deteriorate. Furthermore, sheets or panels based on mineral fibers that are exposed to humid environments tend to irreversibly lose their original shape and are destroyed after drying such that they do not fulfil their original purpose.

The hygroscopic properties of mineral fibers may be reduced by hydrophobization, which, however, complicates the technological process overall and does not always lead to a positive result.

Although mineral fibers are non-flammable materials, the materials used as fiber binders, such as phenol-formaldehyde, phenol-formaldehyde-urea and water repellents, pose a real danger, since the combustion products under the influence of high temperatures are highly toxic.

Alternatives to the materials and structures, which do not have the above-mentioned disadvantages, can be sand-based materials. Recently, these materials have attracted attention due to their low-cost, availability and absolute environmentally friendly profile.

Soundproofing panels containing silica sand as a sound-absorbing material are well known. Fundamentally, most of them are in the form of a box, the interior of which is filled with sand. Such panels are successfully used in the creation of soundproofing structures, providing significant reduction in sound energy impact in almost the entire range of sound frequencies. This ability is explained by the fact that sand, from a rheological point of view, is somewhat like a non-Newtonian fluid, possessing, along with high density, fluidity, viscoelastic properties and thixotropy.

Various panel designs are proposed in the market that differ in size, box material, and the presence of vertical or horizontal partitions inside the box. The most popular panels are those which are made of boxes of corrugated cardboard, varying in thickness and number of layers.

However, these panels, while providing average sound insulation, do not solve the problem of thermal insulation. The thermal conductivity coefficient of dry sand is only 0.47-0.66 W/mK. This is almost an order of magnitude greater than that of commonly used building thermal insulation materials. The additional disadvantage is that the "sand in a box" type structure is easily destroyed as a result of mechanical damage, which leads to sand spilling out of it and loss of insulating properties.

### SUMMARY

In view of the foregoing, it is an object of the present invention to provide a macroporous thermo-sound insulation material having the structure of typical xyrogel and comprised of collaged fibers obtained from collagen containing solid tannery waste, pelt trimming and a mineral filler. Thermo-sound insolation material or panel has high thermal and acoustic insulation characteristics, as well as mechanical strength and fire safety properties. Moreover, the process to produce the macroporous xerogel composite, the thermo-acoustic insulation material and the insulation panel is environmentally friendly due to the use of waste materials, and is safe to prepare and use.
The invention, accordingly, relates to, inter alia, the following embodiments:
1. Thermo-sound insulation material comprising:
   a) at least 25 wt% of collagen fibers obtained from collagen containing solid tannery waste;
   b) at least 1wt% pelt trimming; and
   c) at least 30 wt% mineral filler.
2. The material according to embodiment 1, wherein the collagen fibers obtained from the collagen containing solid tannery waste are selected from chrome tannery waste, semi-finished chrome tannery waste, vegetable tannery waste, chrome-free tannery waste such as aldehyde tannery waste, pelt trimming and/or combinations thereof.
3. The material according to embodiment 1 or 2, wherein the mineral filler is selected from silica sand, perlite sand, kaolin, and gypsum.
4. A thermo-acoustic insulation material comprising the material of any one of embodiments 1 to 3.
5. The thermo-acoustic insulation material according to embodiment 4, wherein the thermo-acoustic insulation material has a thermal conductivity coefficient of at least 0.034 W/mK, preferably between 0.034 and 0.045 W/mK.
6. The thermo-acoustic insulation material according to embodiment 4 or 5, wherein the thermo-acoustic insulation material has a thickness of at least 5 mm, preferably between 5 and 30 mm.
7. The thermo-acoustic insulation material according to any one of embodiments 4 to 6, wherein the thermo-acoustic insulation material has a tensile strength between 100 and 500 kPa.
8. An insulation panel comprising the material of any one of embodiments 1 to 3 or the thermo-acoustic insulation material of any one of embodiments 4 to 7.
9. Use of the thermo-acoustic insulation material of any one of embodiments 4 to 7, or the insulation panel of embodiment 8 for building interior walls, exterior walls, floors and/surfaces in a building.
10. Use of the thermo-acoustic insulation material of any one of embodiments 4 to 7, or the insulation panel of embodiment 8 for thermal and/or sound insulation.
11. Use of the thermo-acoustic insulation material of any one of embodiments 4 to 7, for an interior wall, floor or sound absorbing panel.
12. A method of preparing a thermo-acoustic insulation material, the method comprising the steps of:
   a) providing a liquid dispersion comprising a collagen containing solid tannery waste, a mineral filler and a cross-linking agent;
   b) providing a mold for forming the liquid dispersion of (a) into a predetermined shape;
   c) molding the liquid dispersion of (a) by freezing at a temperature at or below -10 °C to provide a hydrated molded product;
   d) defrosting the molded hydrated product of (c); and
   e) removing the liquid from the molded hydrated product and drying to provide a thermo-acoustic insulation material.
13. The method of embodiment 12, wherein the cross-linking agent is glutaric dialdehyde, starch dialdehyde or a water soluble carbodiimide, preferably the cross-linking agent is glutaric dialdehyde.
14. The method of embodiment 12 or 13, wherein in step (e) the liquid is removed from the molded hydrated product by using a roller press.
15. The method of any one of embodiments 12 to 14, wherein the thermo-acoustic insulation material comprises:
   a) at least 25 wt% collagen fibers obtained from collagen containing solid tannery waste; and
   b) at least 30 wt% mineral filler.
16. The method of any one of embodiments 12 to 15, wherein the collagen fibers obtained from the collagen containing solid tannery waste are selected from chrome tannery waste, semi-finished chrome tannery waste, vegetable tannery waste, chrome-free tannery waste such as aldehyde tannery waste, pelt trimming and combination thereof.
17. The method of any one of embodiments 12 to 16, wherein the mineral filler is selected from silica sand, perlite sand, kaolin, and gypsum.

### DETAILED DESCRIPTION

Accordingly, in a first aspect the invention relates to a thermosthermo-sound insulation material comprising: a) at least 25 wt% collagen fibers obtained from containing solid tannery waste; b) at least 1 wt% of pelt trimming; and c) at least 30 wt% mineral filler. The material may also be chararcterized as macroporous. The material of the invention may thus also be described as macroporous xerogel.

The term "macroporous", as used herein, refers to a material comprising a solid matrix with defined holes or pores which have diameters greater than 50 nm. The term "xerogel", as used herein, refers to a solid formed from a hydrogel by drying. The term "collagen containing solid tannery waste", or grammatical variations thereof, refers to cuttings, shavings, scraps or similar materials of chromated leather, semi-finished chromated leather, vegetable-tanned leather, chrome-free tanned leather, such as aldehyde tanned leather or a combination thereof.

The collagen containing solid tannery waste from which collagen fibers are obtained may be obtained prior to post-tanning operations such as, but not limited to, sammying, splitting, shaving and trimming, rechroming, neutralization, dying, fat liquoring and/or finishing. Solid collagen containing tannery waste typically comprises 75 to 85% collagenous protein (on dry weight) as well as salts, fats and oils, as well as chromium in chromated leather shavings. Within the present invention, it is preferred that the collagen containing solid tannery waste comprises between 75 to 85% collagenous protein, preferably between 77.5 and 82.5%, more preferably about 80% (on dry weight).

Animal hides or skin comprise mainly Type I collagen proteins, though 29 other types of collagens have been identified. The common structural motif of all collagens is the triple helix structure in which each of the three parallel polypeptide strands with left-handed polyproline II (PPII)-type helical conformation coil around each other to form a right-handed triple helix. The collagen comprised in the solid tannery waste forms the collagen fibers which are the matrix or frame of the material of the invention, that is the macroporous xerogel composite. In a method of the invention to form the collagen fiber matrix/frame, the thermo-acoustic insulation material of the invention, the collagen containing tanning waste is combined with, at least, a mineral filler, pelt trimming and cross-linking agent in solution as described in the appended examples and according to the methods of the invention.

The term "pelt trimming", as used herein, refers to untanned skin trimmings/shavings/cuts of an animal after hair and other non-collagen substances removing. Pelt trimmings are produced during the manufacture of leather, where the hides and skins are trimmed to render them amenable for mechanical processing. The trimmed off pelt is a waste product. Pelt trimming is less contaminated by chemicals such as chromium compared to the trimming of tanned, finished, or semi-tanned leathers and thus is more compatible for use in producing structural and/or building materials compared to using chromated tanning waste.

The term "mineral filler", as used herein, refers to substances of mineral origin, which may be added to materials to lower the consumption of more expensive materials and/or to enhance technical properties of the products. The mineral fillers used within the present invention may provide properties such as improved sound and/or thermal insulation, thus providing building materials, structures, sheets and panels which are lightweight and mechanically strong. The mineral filler is preferably selected from silica sand, perlite sand, kaolin and gypsum. However, the mineral filler is not limited and may be any mineral filler known to the skilled person. The mineral filler comprised in the thermo-sound insulation material of the invention, the macroporous xerogel composite of the present invention, is present in an amount of at least 30%, preferably between 30% and 50%, most preferably between 30% and 60%, most preferably at an amount of about 30%. That is, within the present invention, the mineral filler may be present at 30, 31, 32, 33, 34, 35, 36, 37, 38, 39, 40, 41, 42, 43, 45, 46, 47, 48, 49, 50, 51, 52, 53, 54, 55, 56, 57, 58, 59, 60%. In this regard, the mineral filler fills the pores of the material of the invention, the xerogel matrix, providing the material, t7icroporousous xerogel composite, with mechanical strength, sound insulation and/or thermal insulation characteristics.

The inventors of the present invention surprisingly found that a material, such as macroporousous xerogel composite comprising: a) at least 25 wt% collagen fibers obtained from collagen containing solid tannery waste; b) at least 1% of pelt trimming; and c) at least 30 wt% mineral filler, was particularly effective in preparing structures and materials which provide thermal and/or sound insulation properties, as well as mechanical strength and/or fire safety properties. The material of the invention, the macroporous xerogel type composite of the invention, is also safe to prepare as the processing steps are both environmentally friendly and safe for humans to implement.

In a second embodiment, the material of the invention, the macroporous xerogel composite of the present invention, which comprises collagen fibers obtained from collagen containing solid tannery waste, is such that the solid containing tannery waste is selected from chrome tannery waste, semi-finished chrome tannery waste, vegetable tannery waste, chrome-free tannery waste such as aldehyde tannery waste, pelt trimming and/or combinations thereof. Preferably, the collagen fibers obtained from collagen containing solid tannery waste are obtained from chrome tannery waste.

The term "chrome tannery waste", as used herein, refers to, for example, leather material such as cuttings and trimmings obtained after chrome tanning with chromium sulfate. The term "semi-finished chrome tannery waste", as used herein refers to, for example, material obtained after chrome tanning which has not undergone further post-tanning operations such as, but not limited to, sammying, splitting, shaving and trimming, rechroming, neutralization, dying, fat liquoring and finishing. The term "vergetable tannery waste", as used herein, refers to, for example, leather material obtained after vegetable tanning of animal skin or hide using tannins (i.e., water soluble polyphenols) and which are to be disposed. The term "aldehyde tannery waste", as used herein, refers to, for example, leather materials obtained after tanning with an aldehyde including, but not limited to, formaldehyde, glutaraldehyde, and oxazolidine and other aldehydes derivatives capable of tanning animal skin or hide.

In a further embodiment, the material of the invention, the macroporous xerogel of the present invention comprises a mineral filler selected from silica sand, perlite sand, kaolin, and gypsum.

The term "silica sand", as used herein refers to, for example, quartz, white or industrial sand comprised of silicon dioxide. The term "perlite sand", as used herein refers to, for example, amorphous volcanic glass typically comprising silicon dioxide, aluminium oxide, sodium oxide, potassium oxide, iron oxide, magnesium oxide and calcium oxide. The term "kaolin", as used herein, refers to, for example, a hydrated aluminium silicate crystalline mineral. The term "gypsum", as used herein, refers to, for example, a soft sulfate mineral composed of calcium sulfate diydrate.

Silica sand, perlite sand, kaolin and gypsum are particularly advantageous mineral fillers for the present invention as these mineral fillers provide thermal and acoustic insulation and form a lightweight material of the invention such as a macroporous xerogel composite.

In a further embodiment, the present invention relates to a thermo-acoustic insulating material comprising the material of the present invention. The thermo-acoustic insulating material comprising the material of the invention thus may comprise a) at least 25 wt% of collagen fibers obtained from containing solid tannery waste; b) at least 1wt% pelt trimming; and c) at least 30 wt% mineral filler. Moreover, the thermo-acoustic insulating material may comprise collagen fibers obtained from collagen containing solid tannery waste selected from chrome tannery waste, semi-finished chrome tannery waste, vegetable tannery waste, chrome-free tannery waste such as aldehyde tannery waste, pelt trimming and combination thereof. In a further embodiment, the thermo-acoustic insulating material of the present invention comprises mineral filler selected from silica sand, perlite sand, kaolin, and gypsum.

The term "thermo-acoustic insulation material", as used herein, refers to a material or structure formed by molding the macroporous xerogel composite of the invention into, for example, a sheet or panel or other shape. The thermo-acoustic insulation material is formed by preparing a mixture of the collagen containing solid tannery waste, pelt trimming and a cross-linking agent in solution to give a dispersion, mixing the dispersion and pouring the dispersion into a mold with a pre-determined shape. The molded dispersion is then solidified by freezing, thawed and dehydrated to provide the thermo-acoustic insulating material. The thermo-acoustic insulation material of the present invention may take any shape, size or density and thus may be customized for a particular application. Preferably, the thermo-acoustic insulation material is a square or rectangular panel or sheet.

The material of the invention, the thermo-acoustic insulation material of the present invention may be used in construction and building applications, such as for walls, floors and ceilings as well as in vehicles and other applications where sound and/or thermal insulation is required. Moreover, the thermo-acoustic insulation material may be used in interior furniture panels used for noise reduction.

In some embodiments, the invention relates to a thermo-sound insulation material having a thermal conductivity coefficient of at least 0.034 W/mK, preferably between 0.034 and 0.045 W/mK.

The term "thermal conductivity coefficient", as used herein, refers to the thermal conductivity of a material as a measure of its ability to conduct heat. Thermal insulation materials should limit heat loss to a minimum. Within the present invention, a low thermal conductivity is preferred. Traditional thermal insulation materials, including mineral wool, polyurethane, and expanded and extruded polystyrene (XPS), typically exhibit thermal conductivities in the range of 0.02-0.04 W mK (for example, at 373 K, thermal conductivity of mineral wool is 0.047 W/mK, that of glass fiber is 0.038 W/m.K, of calcium silicate is 0.057 W/mK and of magnesia is 0.062 W/mK). Accordingly, the present invention provides an insulation comprising the material of the invention, a macroporous xerogel composite comprised in an insulation panel with excellent thermal conductivity properties with the advantageous property of also providing sound insulating properties. Moreover, the advantageous thermal conductivity properties also reduce energy consumption and expenditure.

In yet further embodiments, the invention relates to a thermo-insulation material having a thickness of at least 5 mm, preferably between 5 and 30 mm. That is, within the present invention, the material may have a thickness of, for example, 5, 6, 7, 8, 9, 10, 11, 12, 13, 14, 15, 16, 17, 18, 19, 20, 21, 22, 23, 24, 25, 26, 27, 28, 29 or 30mm..

The material of the present invention has the surprising benefit of being thin and lightweight, thus making its use for structures and building materials ideal due to ease of installation and transport making it applicable in a variety of industries and settings. A further advantage of preparing thin thermo-acoustic insulation materials is that they may be incorporated into other structures, such as insulation panels, which in turn will be thinner due to the use of less overall material.

In a further embodiment, the present invention relates to a thermo-acoustic insulation material having a tensile strength between 100 and 500 kPa. Within the present invention, the thermo-acoustic insulation material may thus have a tensile strength of, for example, between 150 and 450 kPa, 200 and 400 kPa, 250 and 350 kPa or may have a tensile strength of 300 kPa.

The term "tensile strength", as used herein, refers to the maximum stress the thermo-acoustic insulation material of the present invention can withstand before failing (e.g., stretching and/or losing its original properties) or breaking. The thermo-acoustic insulation material of the present invention has excellent strength of between 100 and 500 kPa, between 150 and 450 kPa, 200 and 400 kPa, 250 and 350 kPa or a tensile strength of 300 kPa, which is improved or equivalent to the tensile strength of commonly used building materials.

The invention further relates to an insulation panel comprising the material, the macroporous xerogel composite of the present invention or the thermo-acoustic insulation material of the present invention.

The term "insulation panel" as used herein, refers to a building or construction panel comprising at least one outer layer, and one interior layer wherein the outer layer or interior layer comprises the macroporous xerogel composite of the present invention or the thermo-acoustic insulation material of the present invention. The term "outer layer" as used herein, refers to the layer orientated to be facing the external environment such as a room or exterior face of a wall in a building. The term "inner layer", as used herein, refers to the layer facing away from the external environment and may be facing the interior components of a wall, for example.

In some embodiments, the present invention relates to the use of the thermo-acoustic insulation material, or the insulation panel of the present invention for building interior walls, exterior walls, floors and/or surfaces in a building.

The thermo-acoustic insulation material and the insulation panel of the invention are ideally suited as components of walls, floors and surfaces in a building due to their excellent sound and thermal insulation properties as well as their excellent fire safety properties, as demonstrated in the appended examples. The reaction to fire class of the thermo-acoustic insulation material is demonstrated to be between A2 and B1 of the European Reaction to Fire Classification System, which that the material has no to very limited contribution to fire growth.

In further embodiments, the invention relates to the use of the thermo-acoustic insulation material or the insulation panel for thermal and/or sound insulation.

As can be seen from the appended examples and as described herein above, the thermo-acoustic insulation material and the insulation panel possess excellent sound and heat insulation properties and thus may be applied in any setting in which this property is desired, such as in buildings and vehicles.

In some embodiments, the invention relates to the use of the thermo-acoustic insulation material for a sound absorbing panel.

The term "sound absorbing panel", as used herein, refers to a panel which may be attached to an interior wall or prepared as a stand-alone panel for the purpose of absorbing sound in a room. Such panels may be used, for example, in music rooms or office spaces to limit noise.

In further embodiments, the invention relates to a method preparing a thermo-acoustic insulation material, the method comprising the steps of: a) providing a liquid dispersion comprising a collagen containing solid tannery waste, a mineral filler and a cross-linking agent; b) providing a mold for forming the liquid dispersion of (a) into a predetermined shape; c) molding the liquid dispersion of (a) by freezing at a temperature at or below -10 °C to provide a hydrated molded product; d) defrosting the molded hydrated product of (c); and e) removing the liquid from the molded hydrated product and drying to provide a thermo-acoustic insulation material.

The term "liquid dispersion", as used herein refers to a mixture comprising the collagen containing tannery waste, pelt trimming, mineral filler and cross-linking agent and water, which has been ground in a colloid mill to provide a homogenous, stable colloidal liquid dispersion.

In preferred embodiments, the liquid dispersion comprises between 1 and 5 wt% collagen containing solid tannery waste; between 0.25 and 1 wt% pelt trimming; and between 1 and 30 wt% minerall filler.

The liquid dispersion of step (a) is then poured into a mold having a predetermined shape. The mold may be any mold suitable for this purpose, preferably, the mold is an aluminium or plastic mold such as a ABC, polypropylene, polyorganosiloxane and other plastic molds. The mold comprising the liquid dispersion is then frozen at or below -10 °C, preferably between -10 °C and -15 °C for a period of time between 5 and 12 hours. The frozen liquid dispersion is then defrosted or thawed to give a molded hydrated product which is mechanically strong. The liquid is then removed from the molded hydrated product mechanically by pressing and/or rolling, preferably by using a roller press and then dried to give a thermo-acoustic insulation material. The thermo-acoustic insulation material takes the form and dimention of the mold and thus may be customized to have a variety of dimensions.

In some embodiments of the methods of the invention , the cross-linking agent is glutaric dialdehyde, starch dialdehyde or a water soluble carbodiimide, preferably the cross-linking agent is glutaric dialdehyde.

In further embodiments of the method of the invention, the liquid is removed from the hydrated molded product by using a roller press.

The term "roller press" as used herein refers to a process of rolling at least once, preferably at least twice, the material through a pair of roles.

In some embodiments, the method of the invention relates to a method wherein the thermo-acoustic insulation material comprises: a) at least 25 wt% collagen fibers obtained from collagen containing solid tannery waste; and b) at least 30 wt% mineral filler.

In further embodiments, the invention related to a method wherein the collagen fibers obtained from the collagen containing solid tannery waste is selected from chrome tannery waste, semi-finished chrome tannery waste, vegetable tannery waste, chrome-free tannery waste such as aldehyde tannery waste, pelt trimming and combination thereof.

In yet further embodiments, the invention relates to a method wherein the mineral filler is selected from silica sand, perlite sand, kaolin, and gypsum.

### BRIEF DESCRIPTION OF THE DRAWINGS

The accompanying drawings, which are incorporated herein and form part of the specification, illustrate the present disclosure and, together with the description, further serve to explain the principles of the disclosure and to enable a person skilled in the relevant art to make and use the disclosure.

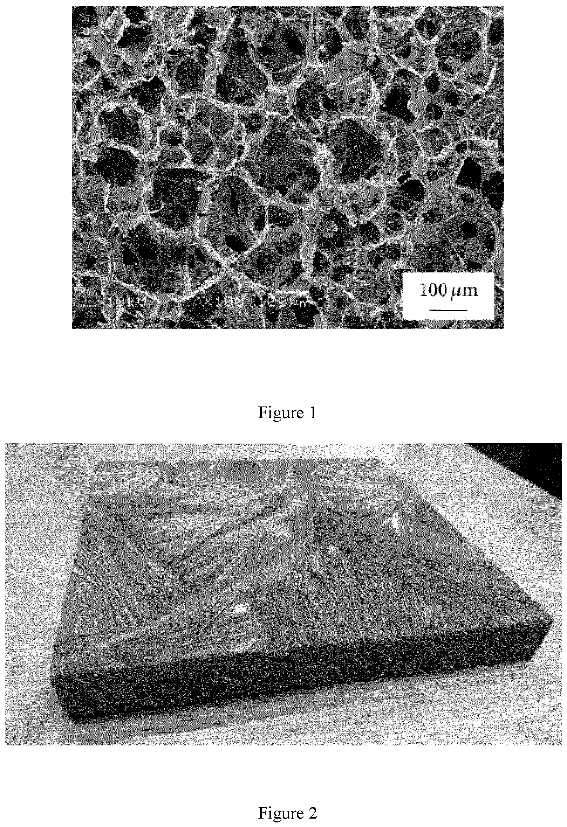

**Figure 1****.** Presents a microscopic photo of the matrix structure of thermo-sound isolation material.
**Figure 2****.** Presents a ready to use heat and sound insulating product produced by the described method.

### EXAMPLES

### Example 1.

4.7 kg of 2.5% aqueous dispersion of chrome shaving and 0.5 kg of dry silica sand (silica dioxide), 0.4 kg of pelt trimming, 6 ml of a 50% aqueous solution of glutaraldehyde were successively added and mixed using a high-speed vacuum dissolver for 15 minutes.

The formed dispersion was poured into an open aluminium mold with dimensions of 600 x 400 x 20 mm, frozen and then kept at a negative temperature of -14°C for 12 hours. After this, the resulting structure was thawed, obtaining a hydrated xerogel.

The hydrated xerogel was removed from the mold and passed through a roller press to remove mechanically bound moisture and dried at a temperature of 45°C.

As a result, a soundproofing material was obtained, which has the form of a panel with a thickness of 20 mm and dimensions of 600 x 400 mm, with a thermal conductivity of 0.04 W/mK, silica sand concentration of 80%; sound absorption coefficient at a frequency of 1000 Hz- 0.9; tensile strength of 0.3 MPa and reaction to fire class of A2.

### Example 2.

Preparation steps were similar as per example 1, with the difference of dry silica sand replaced by 0.2 kg of Perlite sand as mineral filler, 30 ml of 50% glutaraldehyde solution was introduced. As a result, a thermo- and sound insulating panel was obtained with the thickness of 20 mm, dimensions 600x400 mm, perlite sand concentration achieved of 75%, thermal conductivity -0.038 W/m K, sound absorption coefficient at 1000 Hz- 0.82, tensile strength of 0.25 MPa, fire reaction class of A2.

### Example 3.

Preparation steps were similar as per example 1, with the difference that only 0.1 kg of dry silica sand is used in the preparation. Dispersion was poured into open aluminium tray/mold and after reaching frozen state, kept at -10 °C for 8 hours. As a result, a 20 mm thickness heat and sound isolation panel was created, silica sand concentration of 61%, thermal conductivity 0.042 W/mK, sound absorption coefficient at 1000 Hz - 0.75, tensile strength of 0.30 MPa, fire reaction class of A2.

### Example 4.

Preparation steps were similar as per example 1, with the difference that chrome shaving waste dispersion was replaced by 2.5 kg of 3.0 % dispersion vegetable tanned leather waste in water and 0.35 kg of kaolin powder was added. Dispersion was then poured into an open aluminium tray and kept at -10 °C for 12 hours. As a result, a 10 mm thickness heat and sound isolation panel was created, with kaolin concentration of 20%, thermal conductivity of 0.047 W/mK, sound absorption coefficient at 1000 Hz - 0.70, tensile strength of 0.5 MPa, fire reaction class of A2.

## Claims

1. Thermo-sound insulation material comprising:
a) at least 25 wt% of collagen fibers obtained from collagen containing solid tannery waste;
b) at least 1wt% pelt trimming; and
c) at least 30 wt% mineral filler.

2. The material according to claim 1, wherein the collagen fibers obtained from the collagen containing solid tannery waste are selected from chrome tannery waste, semi-finished chrome tannery waste, vegetable tannery waste, chrome-free tannery waste such as aldehyde tannery waste, pelt trimming and/or combinations thereof.

3. The material according to claim 1 or 2, wherein the mineral filler is selected from silica sand, perlite sand, kaolin, and gypsum.

4. A thermo-acoustic insulation material comprising the material of any one of claims 1 to 3.

5. The thermo-acoustic insulation material according to claim 4, wherein the thermo-acoustic insulation material has a thermal conductivity coefficient of at least 0.034 W/mK, preferably between 0.034 and 0.045 W/mK.

6. The thermo-acoustic insulation material according to claim 4 or 5, wherein the thermo-acoustic insulation material has a thickness of at least 5 mm, preferably between 5 and 30 mm.

7. The thermo-acoustic insulation material according to any one of claims 4 to 6, wherein the thermo-acoustic insulation material has a tensile strength between 100 and 500 kPa.

8. An insulation panel comprising the material of any one of claims 1 to 3 or the thermo-acoustic insulation material of any one of claims 4 to 7.

9. Use of the thermo-acoustic insulation material of any one of claims 4 to 7, or the insulation panel of claim 8
for building interior walls, exterior walls, floors and/surfaces in a building; and/or for thermal and/or sound insulation.

10. Use of the thermo-acoustic insulation material of any one of claims 4 to 7, for an interior wall, floor or sound absorbing panel.

11. A method of preparing a thermo-acoustic insulation material, the method comprising the steps of:
a) providing a liquid dispersion comprising a collagen containing solid tannery waste, a mineral filler and a cross-linking agent;
b) providing a mold for forming the liquid dispersion of (a) into a predetermined shape;
c) molding the liquid dispersion of (a) by freezing at a temperature at or below -10 °C to provide a hydrated molded product;
d) defrosting the molded hydrated product of (c); and
e) removing the liquid from the molded hydrated product and drying to provide a thermo-acoustic insulation material,
preferably, wherein the cross-linking agent is glutaric dialdehyde, starch dialdehyde or a water soluble carbodiimide, preferably the cross-linking agent is glutaric dialdehyde.
preferably, wherein in step (e) the liquid is removed from the molded hydrated product by using a roller press.

12. The method of claim 11, wherein the thermo-acoustic insulation material comprises:
a) at least 25 wt% collagen fibers obtained from collagen containing solid tannery waste; and
b) at least 30 wt% mineral filler.

13. The method of any one of claims 11 to 12, wherein the collagen fibers obtained from the collagen containing solid tannery waste are selected from chrome tannery waste, semi-finished chrome tannery waste, vegetable tannery waste, chrome-free tannery waste such as aldehyde tannery waste, pelt trimming and combination thereof.

14. The method of any one of claims 11 to 13, wherein the mineral filler is selected from silica sand, perlite sand, kaolin, and gypsum.
